# EUROPÄISCHE PATENTANMELDUNG

(11) **EP 1 336 629 A2**
(43) Veröffentlichungstag der Anmeldung: **20.08.2003**
(21) Anmeldenummer: 03002293.3
(22) Anmeldetag: 03.02.2003
(51) Int. Cl.: C08G 18/42, C08G 18/67, C09D 175/16

(54) **Verfahren zur Herstellung von Urethan(meth)acrylaten**

(30) Priorität: 16.02.2002 DE 10206483; 29.10.2002 DE 10250512
(71) Anmelder: Degussa AG, 40474 Düsseldorf (DE)
(72) Erfinder: Weihrauch, Thomas, Dr., 48249 Dülmen (DE); Wenning, Andreas, Dr., 48301 Nottuln (DE)

(57) **Zusammenfassung**

Die Erfindung betrifft ein Verfahren zur Lösemittel freien, kontinuierlichen Herstellung von Urethan(meth)acrylaten in einem Extruder, Intensiv-Kneter, Intensiv-Mischer oder statischen Mischer. Diese Urethanacrylate können zur Herstellung Strahlen härtbarer transparenter oder pigmentierter Lacke, insbesondere Pulverlacke verwendet werden.

## Beschreibung

Die Erfindung betrifft ein Verfahren zur Lösemittel freien, kontinuierlichen Herstellung von Urethan(meth)acrylaten in einem Extruder, Intensiv-Kneter, Intensiv-Mischer oder statischen Mischer. Diese Urethanacrylate können zur Herstellung Strahlen härtbarer transparenter oder pigmentierter Lacke, insbesondere Pulverlacke verwendet werden.

Strahlen härtbare Lacke sind seit längerem Stand der Technik. Pulverlacke, die durch Strahlung vernetzt werden, sind erst seit kurzer Zeit bekannt und werden in der Lack verarbeitenden Industrie zunehmend verwendet. Ihre Vorteile liegen in der sehr kurzen Vernetzungszeit von wenigen Sekunden, in einem optimalen Verlauf der Beschichtung durch Trennung des Aufschmelzvorgangs von der Strahlen-Vernetzung. Zudem können auch Substrate wie Holz- oder Holzwerkstoffe, Kunststoffe, Glas, Papier oder metallische Substrate mit Temperatur sensiblen Anbauteilen beschichtet werden.

Urethan(meth)acrylate als Bindemittel für Strahlen härtbare Pulverlacke werden z. B. in DE 199 44 156, DE 199 47 521, EP 1 103 572, US 3,974303 oder DE 100 58 617 beschrieben und werden ausschließlich diskontinuierlich in einem Batch-Verfahren im Lösemittel als auch Lösemittel frei hergestellt.

Die Herstellung von Urethan(meth)acrylaten im Lösemittel hat nicht nur den Nachteil, dass das Lösemittel bzw. das Lösemittelgemisch nachträglich wieder entfernt werden muss. Es sind auch aufwendige, spezielle Technologien zur Lösemittelentfernung erforderlich. Dünnschichter oder Filmtruder sind z. B. geeignet, unter Vakuum bei relativ niedrigen Temperaturen von unter 130°C die in der Wärme Polymerisation anfälligen Reaktionsprodukte vom Lösemittel zu befreien. Diese Verfahren sind jedoch sehr kostspielig.

Die Herstellbarkeit von Urethan(meth)acrylaten in einem Lösemittel freien Batch-Prozess ist begrenzt. Insbesondere amorphe Urethan(meth)acrylate mit hoher Glasübergangstemperatur lassen sich in einem derartigen Verfahren nicht mehr herstellen. Die Reaktionstemperaturen müssten so hoch gewählt werden, dass sich eine Polymerisation der Verfahrensprodukte nicht mehr sicher vermeiden lässt.

Aufgabe der vorliegenden Erfindung war es daher, ein neues Verfahren zur Herstellung von Urethan(meth)acrylaten zur Verfügung zu stellen, das die genannten Nachteile des Standes der Technik nicht aufweist.

Überraschenderweise wurde gefunden, dass Urethan(meth)acrylate in einem Extruder, Intensiv-Kneter, Intensiv-Mischer oder statischen Mischer schnell und wenig aufwendig herstellbar sind, ohne das eine (Teil)Polymerisation der (Meth)acrylatdoppelbindungen auftritt.

Gegenstand der Erfindung ist daher ein Verfahren zur Lösemittel freien und kontinuierlichen Herstellung von Urethan(meth)acrylaten mit einem Schmelzbereich von 30 bis 130 °C, durch Umsetzung von
A) mindestens einem Hydroxylgruppen haltigen Polymeren,
B) mindestens einem Di- oder Polyisocyanat,
C) mindestens einer polymerisationsfähigen Verbindung mit mindestens einer freien

Hydroxylgruppe und einer polymerisationsfähigen (Meth)acrylatgruppe, in einem Extruder, Intensiv-Kneter, Intensiv-Mischer oder statischen Mischer durch intensive Durchmischung und kurzzeitiger Reaktion bei Wärmezufuhr und nachfolgender Isolierung des Endproduktes durch schnelle Abkühlung.

Das Prinzip des Verfahrens besteht darin, dass die Umsetzungspartner kontinuierlich in einem Extruder, Intensiv-Kneter, Intensiv-Mischer oder statischen Mischer durch intensive Durchmischung und kurzzeitige Reaktion bei Wärmezufuhr erfolgt. Gegebenenfalls wird eine kontinuierliche Nachreaktion nachgeschaltet. Durch anschließende schnelle Abkühlung gelingt es dann, das Endprodukt zu erhalten.

Es werden im Allgemeinen Temperaturen von 10 bis 325 °C im Verfahren angewendet, wobei die Temperatur wie die Beispiele zeigen, je nach Produkt variiert. Dies bedeutet, dass die Verweilzeit der Einsatzstoffe in den oben genannten Aggregaten üblicherweise 3 Sekunden bis 15 Minuten, bevorzugt 3 Sekunden bis 5 Minuten, besonders bevorzugt 5 bis 180 Sekunden beträgt. Die Reaktanden werden dabei kurzzeitig unter Wärmezufuhr bei Temperaturen von 25 °C bis 320 °C, bevorzugt von 50 bis 250 °C, ganz besonders bevorzugt von 70 bis 220 °C zur Reaktion gebracht.

Als Aggregate sind Extruder wie Ein- oder Mehrschneckenextruder, insbesondere Zweischneckenextruder, Planetwalzenextruder oder Ringextruder, Intensiv-Kneter, Intensiv-Mischer wie Thorax-Mischer, oder statische Mischer für das erfindungsgemäße Verfahren besonders geeignet und werden bevorzugt verwendet.

Überraschend war es, dass die Umsetzung, die im diskontinuierlichen Verfahren mehrere Stunden benötigt, in den genannten Aggregaten in einigen Sekunden vollständig abläuft. Nach dem Stand der Technik gelingt es nicht, einfach weiterverarbeitbare amorphe Produkte mit einer für eine gute Lagerstabilität benötige hohe Glasübergangstemperatur zu erhalten. Das Reaktionsprodukt besitzt eine sehr hohe Viskosität. Dadurch lässt es sich nur schwer mechanisch aus dem Reaktor umfüllen. Zudem sind für Umsatz der Ausgangsstoffe und Rührfähigkeit der Schmelze hohe Temperaturen notwendig. Insbesondere bei technischen relevanten Produktionsmengen findet eine zumindest Teilpolymerisation der ungesättigten Acrylatgruppen statt. Damit ist das Produkt nicht mehr verwendbar. Es muss unter großem Aufwand mechanisch aus dem Kessel entfernt werden. Von prinzipieller Natur ist die Tatsache, dass kurzzeitige thermische Belastung im Zusammenspiel mit der Mischwirkung des Intensivkneters ausreicht, um die Reaktionspartner vollständig oder weitestgehendst umzusetzen. Die Intensivkneter ermöglichen durch geeignete Bestückung der Mischkammern bzw. Zusammenstellung der Schneckengeometrien intensive rasche Durchmischung bei gleichzeitigem intensiven Wärmeaustausch. Andererseits ist auch eine gleichmäßige Durchströmung in Längsrichtung mit möglichst einheitlicher Verweilzeit gewährleistet. Außerdem muss eine unterschiedliche Temperierung in den einzelnen Gerätegehäusen- oder Abschnitten möglich sein.

Die Reaktionsprodukte werden den Aggregaten in der Regel in getrennten Produktströmen zudosiert. Bei mehr als zwei Produktströmen können diese auch gebündelt zugeführt werden. Hydroxylgruppen haltiger amorphe und/oder kristalline Polymere können zu einem Produktstrom zusammengefasst werden. Es ist auch möglich, diesem Produktstrom zusätzlich Katalysatoren und/oder Zuschlagstoffe wie Verlaufmittel, Stabilisatoren oder Haftvermittler zuzufügen. Ebenso können Mono- oder Polyisocyanat mit einer polymersationsfähigen Verbindung mit mindestens einer freien Alkoholgruppe und einer polymerisationsfähigen (Meth)acrylatgruppe zur Reaktion gebracht werden und mit Katalysatoren und/oder Zuschlagstoffe wie Verlaufmittel, Stabilisatoren oder Haftvermittler in einem Produktstrom zusammengefasst werden. Die Stoffströme können auch geteilt werden und so in unterschiedlichen Anteilen an verschiedenen Stellen den Aggregaten zugeführt werden. Auf diese Weise werden gezielt Konzentrationsgradienten eingestellt, was die Vollständigkeit der Reaktion herbeiführen kann. Die Eintrittsstelle der Produktströme in der Reihenfolge kann variable und zeitlich versetzt gehandhabt werden.

Zur Vorreaktion und/oder Vervollständigung der Reaktion können mehrere Aggregate auch kombiniert werden.

Die der schnellen Reaktion nachgeschaltete Abkühlung kann in dem Reaktionsteil integriert sein, in Form einer mehrgehäusigen Ausführungsform wie bei Extrudern oder Conterna-Maschinen. Eingesetzt werden können außerdem: Rohrbündel, Rohrschlangen, Kühlwalzen, Luftförderer und Transportbänder aus Metall.

Die Konfektionierung wird je nach Viskosität des den Intensivkneter- oder die Nachreaktionszone verlassenden Produktes zunächst durch weitere Abkühlung mittels entsprechender vorgenannter Gerätschaften auf eine geeignete Temperatur gebracht. Dann erfolgt die Pastillierung oder aber eine Zerkleinerung in eine gewünschte Partikelgröße mittels Walzenbrecher, Stiftmühle, Hammermühle, Schuppwalzen oder Ähnlichem.

Urethan(meth)acrylate im Sinne dieser Erfindung bestehen aus einem Hydroxylgruppen haltigen Polymer A), an das durch Umsetzung mit Di- oder Polyisocyanaten B) und acrylathaltigen Alkoholen C) Urethangruppen und Acrylatgruppen angebunden werden.

Das Hydroxylgruppen haltige Polymer A) kann ein Polymerisat, Polykondensat oder eine Polyadditionsverbindung sein. Bevorzugte Komponenten sind Polyester, Polyether, Polyacrylat, Polythioether, Polyacetale, Polyesteramide, Epoxidharze mit Hydroxylgruppen im Molekül, Aminoplaste und ihre Modifizierungsprodukte mit polyfunktionellen Alkoholen, Polyazomethine, Polyurethane, Polysulfonamide, Melaminderivate, Celluloseester, Celluloseether und teilweise verseifte Homo- oder Copolymerisate von Vinylestern. Besonders bevorzugt sind Polyester und Polyacrylate.

Die erfindungsgemäßen Urethan(meth)acrylate können amorpher oder (semi)kristalliner Natur sein. Auch Mischungen aus amorphen und (semi)kristallinen Urethan(meth)acrylaten sind einsetzbar.

Werden als Hydroxylgruppen haltige Polymere A) amorphe Polyester mit einem Tg von 35 - 80°C eingesetzt, werden sie mit Di- oder Polyisocyanaten B) und einer Verbindung C), die gleichzeitig mindestens eine Hydroxylgruppe und mindestens eine polymerisationsfähige Acrylatgruppe enthält, zu den erfindungsgemäßen amorphen Urethan(meth)acrylaten umgesetzt. Diese Urethan(meth)acrylate weisen ebenso Urethangruppen wie endständige (Meth)acrylatgruppen auf.

Die amorphen Hydroxylgruppen haltigen Polyester mit einem Tg von 35 - 80°C werden hergestellt durch Polykondensation von geeigneten Dicarbonsäuren und Diolen. Die Kondensation erfolgt auf an sich bekannte Weise in einer Inertgas-Atmosphäre bei Temperaturen von 100 bis 260°C, vorzugsweise 130 bis 220°C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Die für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutarsäure, 1,4-Cyclohexandicarbonsäure bzw. - soweit zugänglich - deren Anhydride oder Ester. Besonders gut geeignet sind Isophthaläsure, Terephthalsäure, Hexahydroterephthalsäure und 1,4-Cyclohexandicarbonsäure.

Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methylpropandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, in Frage. Bevorzugt sind Monoethylenglykol, Neopentylglykol, Dicidol, Cyclohexandimethanol, Trimethylolpropan und Glycerin.

Eine nachträgliche bzw. zusätzliche Umsetzung der Polyester mit Polyisocyanaten ist möglich. In derartigen Fällen lässt sich z. B. das Isophorondiisocyanat-Isocyanurat vorteilhaft verwenden.

So hergestellte amorphe Polyester haben eine OH-Zahl von 15 - 100 mg KOH/g, einen Tg von 35 - 80°C und eine Säurezahl von <5. Es können auch Gemische von amorphen Polyestem eingesetzt werden.

Werden als Hydroxylgruppen haltige Polymere A) kristalline Polyester eingesetzt, werden sie mit Di- oder Polyisocyanaten B) und einer Verbindung C), die gleichzeitig mindestens eine Hydroxylgruppe und mindestens eine polymerisationsfähige Acrylatgruppe enthält, zu den erfindungsgemäßen kristallinen Urethan(meth)acrylaten umgesetzt. Diese Urethan(meth)acrylate weisen ebenso Urethangruppen wie endständige (Meth)acrylatgruppen auf.

Kristalline Hydroxylgruppen haltige Polyester werden hergestellt durch Polykondensation wie schon für amorphe Polyester beschrieben. Dazu wird eine Säurekomponente, bestehend aus einer gesättigten linearen aliphatischen oder cycloaliphatischen Dicarbonsäure mit 4-14 Kohlenstoffatomen oder einer anderen aliphatischen oder cycloaliphatischen oder aromatischen Di- oder Polycarbonsäure, mit einer Alkoholkomponente, bestehend aus einem linearen aliphatischen Diol mit 2-15 Kohlenstoffatomen und einem anderen aliphatischen oder cycloaliphatischen Di- oder Polyol mit 2-15 Kohlenstoffatomen, umgesetzt. Die so hergestellten kristallinen Hydroxylgruppen haltigen Polyester haben eine OH-Zahl von 15-80 mg KOH/g, eine Säurezahl <5 mg KOH/g und einen Schmelzpunkt von 40-130°C.

Für die Herstellung von kristallinen Polyestern bevorzugte Carbonsäuren sind Bernsteinsäure, Adipinsäure, Korksäure, Azelainsäure, Sebacinsäure, Dodecandisäure, 1,4-Cyclohexandicarbonsäure, Phthalsäure, Terephthalsäure, Isophthalsäure, Trimellitsäure, Pyromellitsäure, Tetrahydrophthalsäure, Hexahydrophthalsäure, Hexahydroterephthalsäure, Endomethylentetrahydrophthalsäure, Glutarsäure bzw. - soweit zugänglich - deren Anhydride oder Ester. Besonders gut geeignet sind Dodecandisäure, Adipinsäure, Bernsteinsäure, Sebacinsäure, Isophthalsäure, Terephthalsäure, Hexahydroterephthalsäure und 1,4-Cyclohexandicarbonsäure.

Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methylpropandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, infrage. Bevorzugt sind Monoethylenglykol, Butandiol, Hexandiol, Neopentylglykol, Cyclohexandimethanol, Trimethylolpropan und Glycerin.

In den erfindungsgemäßen Urethan(meth)acrylaten werden als Polyisocyanate B) Diisocyanate aliphatischer, (cyclo)aliphatischer oder cycloaliphatischen Struktur eingesetzt. Repräsentative Beispiele der Polyisocyanate sind 2-Methylpentamethylen-1,5-diisocyanat, Hexamethylendiisocyanat, Trimethylhexamethylen-1,6-diisocyanat, insbesondere das 2,2,4- und das 2,4,4-Isomere und technische Gemische beider Isomere, 4,4'-Methylenbis(cyclohexylisocyanat), Norbornandiisocyanat, und 3,3,5-Trimethyl-1-isocyanato-3-isocyanatomethylcyclohexan (IPDI). Ebenfalls gut geeignet sind auch Polyisocyanate, die durch Umsetzung von Polyisocyanaten mit sich selbst über Isocyanatgruppen erhältlich sind, wie Isocyanurate, die durch Reaktion dreier Isocyanatgruppen entstehen. Die Polyisocyanate können ebenfalls Biuret- oder Allophanatgruppen enthalten. Besonders gut geeignet ist IPDI.

Als polymerisationsfähige Verbindungen C) mit mindestens einer freien Hydroxylgruppe und einer polymerisationsfähigen (Meth)acrylatgruppe kommen z.B. Hydroxyethylacrylat (HEA), Hydroxyethylmethacrylat (HEMA), Hydroxypropylacrylat, Hydroxypropylmethacrylat, Glycerindiacrylat und Glycerindimethacrylat in Frage. Besonders gut geeignet ist Hydroxyethylacrylat (HEA).

Falls amorphe und kristalline Urethan(meth)acrylate gemeinsam hergestellt werden sollen, ist das Mischungsverhältnis der amorphen und kristallinen Ausgangspolyester zueinander beliebig einstellbar.

Die Reaktion zwischen den Hydroxylgruppen haltigen Polymeren, den Mono- oder Polyisocyanaten und den polymerisationsfähigen Verbindungen mit mindestens einer freien Hydroxylgruppe und einer polymerisationsfähigen (Meth)acrylatgruppe kann durch Katalysatoren wie z.B. Zinn-Verbindungen beschleunigt werden. Ein geeigneter Katalysator ist z. B. Dibutylzinndilaurat (DBTL). Die Konzentration der Katalysatoren beträgt 0,01 bis 5 Gew.-%, bevorzugt 0,01 bis 3 Gew.-% bezogen auf die Gesamtrezeptur.

Die erfindungsgemäß hergestellten Urethan(meth)acrylate sind als Bindemittel für Strahlen härtbare Lacke, insbesondere für Pulverlacke geeignet.

Zur Herstellung der Strahlen härtbaren Pulverlacke werden die erfindungsgemäß hergestellten Urethan(meth)acrylate mit Additiven, Zuschlag- und Hilfsstoffen und ggf. Pigmenten und/oder Füllern, die dem Fachmann bekannt sind, formuliert. Alle Einsatzstoffe werden miteinander vermischt. Die Homogenisierung bzw. Dispergierung der Einsatzstoffe kann in geeigneten Aggregaten, wie z. B. beheizbaren Knetern, vorzugsweise jedoch durch Extrudieren, erfolgen.

Die so hergestellten Strahlen härtbaren Pulverlacke können nach den üblichen Pulverauftragsverfahren, wie z.B. elektrostatisches oder tribostatisches Pulversprühen, Wirbelsintern oder elektrostatisches Wirbelsintern erfolgen. Geeignete Substrate sind z. B. unbehandelte oder vorbehandelte metallische Substrate, Holz, Holzwerkstoffe, Kunststoffe, Glas oder Papier.

Nachfolgend wird der Gegenstand der Erfindung anhand von Beispielen erläutert.

### Beispiele

Herstellung der Urethan(meth)acrylate nach dem erfindungsgemäßen Verfahren

### 1. Amorphes Urethanacrylat

### Einssatzstoffe:

3770 g des amorphen Hydroxylgruppen haltigen Polyesters aus Isophthalsäure 100%, Monoethylenglycol 20% und Dicidol 80% (OH-Zahl 40 mg KOH/g, Tg 75°C), 750 g IPDI, 10 g IONOL CP, 10 g DBTL und 470 g Hydroxyethylacrylat.

Es wurde mit drei Stoffströmen gearbeitet:
Strom 1 bestand aus der Mischung von Isophorondiisocyanat (IPDI) und DBTL.
Strom 2 bestand aus der Lösung des IONOL CP in Hydroxyethylacrylat.
Strom 3 bestand aus der Schmelze des amorphen Hydroxylgruppen haltigen Polyesters aus Isophthalsäure (100%), Monoethylenglycol (20%) und Dicidol (80%).
Strom 1 wurde mit einer Menge von 380 g/h in des erste Gehäuse eines Zweischneckenextruders eingespeist (Temperatur des Stoffstromes 25 bis 50°C).
Strom 2 wurde in das gleiche Gehäuse mit einer Menge von 240 g/h eingespeist (Temperatur des Stoffstromes 25 bis 40°C).
Strom 3 wurde in das dritte Gehäuse mit einer Menge von 1885 g/h eingespeist (Temperatur des Stoffstromes etwa 190°C).
Der eingesetzte Extruder bestand aus 8 Gehäusen, die separat geheizt und gekühlt werden konnten. Gehäuse 1: 70 ― 100°C, Gehäuse 2: 70-150°C, Gehäuse 3-8: 160-220°C.

Alle Temperaturen stellten Soll-Temperaturen dar. Die Regelung erfolgte über Elektroheizung bzw. Wasserkühlung. Die Düse wurde ebenfalls elektrisch beheizt. Die Schneckendrehzahl betrug 25 bis 100 Upm. Der Durchsatz betrug in diesem Beispiel 2505 g/h.
Das Reaktionsprodukt wurde abgekühlt und gebrochen oder gemahlen. Es hatte einen Gehalt an freien NCO-Gruppen von 0,15% und einen Tg von 62°C.

### 2. Kristallines Urethanacrylat

### Einssatzstoffe:

3986 g des kristallinen Hydroxylgruppen haltigen Polyesters aus Dodecandisäure 100% und Monoethylengylcol 100% (OH-Zahl 31 mg KOH/g, Smp. 81°C), Umsetzungsprodukt aus der Umsetzung von 618 g IPDI mit 388 g Hydroxyethylacrylat, 3,8 g IONOL CP und 3,8 g DBTL.

Es wurde mit zwei Stoffströmen gearbeitet:
Strom 1 bestand aus der Lösung des IONOL CP und des DBTL im Umsetzungsprodukt von IPDI und Hydroxyethylacrylat.
Strom 2 bestand aus der Schmelze des kristallinen Hydroxylgruppen haltigen Polyesters aus Dodecandisäure (100%) und Monoethylengylcol (100%).

Strom 1 wurde mit einer Menge von 507 g/h in das erste Gehäuse eines Zweischneckenextruders eingespeist (Temperatur des Stoffstromes 25 bis 50°C).
Strom 2 wurde in das zweite Gehäuse mit einer Menge von 1993 g/h eingespeist (Temperatur des Stoffstromes 150―190°C).
Der eingesetzte Extruder bestand aus 8 Gehäusen, die separat geheizt und gekühlt werden konnten. Gehäuse 1: 20-50°C, Gehäuse 2: 150-200°C, Gehäuse 3-8: 160-220°C.
Alle Temperaturen stellten Soll-Temperaturen dar. Die Regelung erfolgte über Elektroheizung bzw. Wasserkühlung. Die Düse wurde ebenfalls elektrisch beheizt. Die Schneckendrehzahl betrug 25 bis 100 Upm. Der Durchsatz betrug in diesem Beispiel 2500 g/h.
Das Reaktionsprodukt wurde abgekühlt und gebrochen oder gemahlen. Es hatte einen Gehalt an freien NCO-Gruppen von < 0,1% und einen Schmelzpunkt von 80°C.

### 3. Mischung aus amorphem und kristallinem Urethanacrylat

### Einssatzstoffe:

80 Gew.-% amorpher Polyester aus 1), 20 Gew.-% kristalliner Polyester aus 2), ansonsten wie oben.

Die Rezeptur im einzelnen:
3010 g des amorphen Hydroxylgruppen haltigen Polyesters aus Isophthalsäure 100%, Monoethylenglycol 20% und Dicidol 80% (OH-Zahl 40 mg KOH/g, Tg 75°C), 797 g des kristallinen Hydroxylgruppen haltigen Polyesters aus Dodecandisäure 100% und Monoethylengylcol 100% (OH-Zahl 31 mg KOH/g, Smp. 81°C), Umsetzungsprodukt aus der Umsetzung von 723 g IPDI mit 453 g Hydroxyethylacrylat, 9 g IONOL CP und 9 g DBTL.

Es wurde mit zwei Stoffströmen gearbeitet:
Strom 1 bestand aus der Lösung des IONOL CP und des DBTL im Umsetzungsprodukt von IPDI und Hydroxyethylacrylat.
Strom 2 bestand aus der Schmelze der Mischung von 80 Gew. % des amorphen Hydroxylgruppen haltigen Polyesters aus Isophthalsäure 100%, Monoethylenglycol 20% und Dicidol 80% und 20 Gew.% des kristallinen Hydroxylgruppen haltigen Polyesters aus Dodecandisäure 100% und Monoethylengylcol 100%.

Strom 1 wurde mit einer Menge von 597 g/h in das erste Gehäuse eines Zweischneckenextruders eingespeist (Temperatur des Stoffstromes 25 bis 50°C).
Strom 2 wurde in das zweite Gehäuse mit einer Menge von 1903 g/h eingespeist (Temperatur des Stoffstromes 150-190°C).
Der eingesetzte Extruder bestand aus 8 Gehäusen, die separat geheizt und gekühlt werden konnten. Gehäuse 1: 20-50°C, Gehäuse 2: 150-200°C, Gehäuse 3-8: 160-220°C.
Alle Temperaturen stellten Soll-Temperaturen dar. Die Regelung erfolgte über Elektroheizung bzw. Wasserkühlung. Die Düse wurde ebenfalls elektrisch beheizt. Die Schneckendrehzahl betrug 25 bis 100 Upm. Der Durchsatz betrug in diesem Beispiel 2500 g/h.

Das Reaktionsprodukt wurde abgekühlt und gebrochen oder gemahlen. Es hatte einen Gehalt an freien NCO-Gruppen von 0,12%.

## Patentansprüche

1. Verfahren zur Lösemittel freien, kontinuierlichen Herstellung von Urethan(meth)acrylaten mit einem Schmelzbereich von 30 bis 130°C, durch Umsetzung von
A) mindestens einem Hydroxylgruppen haltigen Polymeren,
B) mindestens einem Di- oder Polyisocyanat,
C) mindestens einer polymerisationsfähigen Verbindung mit mindestens einer freien Hydroxylgruppe und einer polymerisationsfähigen (Meth)acrylatgruppe,
in einem Extruder, Intensiv-Kneter, Intensiv-Mischer oder statischen Mischer durch intensive Durchmischung und kurzzeitiger Reaktion bei Wärmezufuhr und nachfolgender Isolierung des Endproduktes durch schnelle Abkühlung.

2. Verfahren nach Anspruch 1,
**dadurch gekennzeichnet,**
**dass** das Hydroxylgruppen haltige Polymer A) ein Polyester, Polyacrylat, Polythioether, Polyacetal, Polyesteramid, Epoxidharz mit Hydroxylgruppen im Molekül, Aminoplast mit polyfunktionellen Alkoholen modifzierte Aminoplaste, Polyazomethin, Polyurethan, Polysulfonamid, Melaminderivat, Celluloseester, Celluloseether, teilweises verseiftes Homo- oder Copolymerisat eines Vinylesters ist.

3. Verfahren nach Anspruch 2,
**dadurch gekennzeichnet,**
**dass** der Hydroxylgruppen haltige Polyester A) amorph ist.

4. Verfahren nach Anspruch 2,
**dadurch gekennzeichnet,**
**dass** der Hydroxylgruppen haltige Polyester A) kristallin ist.

5. Verfahren nach Anspruch 2,
**dadurch gekennzeichnet,**
**dass** es sich bei dem Hydroxylgruppen haltige Polyester A) um eine Mischung aus amorphem und kristallinem Polyester handelt.

6. Verfahren nach mindestens einem der Ansprüche 1 bis 5,
**dadurch gekennzeichnet,**
**dass** als Di- oder Polyisocyanat B) Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbornandiisocyanat allein oder in Mischungen oder Folgeprodukte dieser Diisocyanate, wie Isocyanurate, Allophanate oder Biurete, eingesetzt wird.

7. Verfahren nach einem der Ansprüche 1 bis 6,
**dadurch gekennzeichnet,**
**dass** als polymerisationsfähige Verbindung C) mit mindestens einer freien Hydroxylgruppe und einer polymerisationsfähigen (Meth)acrylatgruppe Hydroxyethylacrylat eingesetzt wird.

8. Verfahren nach einem der Ansprüche 1 bis 7,
**dadurch gekennzeichnet,**
**dass** die Reaktion im Ein-, Zwei- oder Mehrschneckenextruder, Ringextruder oder Planetwalzenextruder erfolgt.

9. Verfahren nach Anspruch 8,
**dadurch gekennzeichnet,**
**dass** die Reaktion in einem Zweischneckenextruder erfolgt.

10. Verfahren nach einem der Ansprüche 1 bis 7,
**dadurch gekennzeichnet,**
**dass** die Reaktion in einem Intensiv-Mischer oder Intensiv-Kneter erfolgt.

11. Verfahren nach einem der Ansprüche 1 bis 7,
**dadurch gekennzeichnet,**
**dass** die Reaktion in einem statischen Mischer erfolgt.

12. Verfahren nach einem der Ansprüche 1 bis 11,
**dadurch gekennzeichnet,**
**dass** die Reaktion in einem Extruder, Intensiv-Kneter, Intensiv-Mischer oder statischem Mischer mit mehreren gleichen oder verschiedenen Gehäusen, die unabhängig voneinander thermisch gesteuert werden können, erfolgt.

13. Verfahren nach einem der Ansprüche 1 bis 12,
**dadurch gekennzeichnet,**
**dass** die Temperatur im Extruder, Intensiv-Kneter, Intensiv-Mischer oder statischen Mischer 10 bis 325 °C beträgt.

14. Verfahren nach einem der Ansprüche 1 bis 13,
**dadurch gekennzeichnet,**
**dass** der Extruder oder Intensiv-Kneter durch geeignete Bestückung der Mischkammern und Zusammenstellung der Schneckengeometrie einerseits zu einer intensiven raschen Durchmischung und schnellen Reaktion bei gleichzeitigem intensiven Wärmeaustausch führen, und andererseits eine gleichmäßige Durchströmung in Längsrichtung mit möglichst einheitlicher Verweilzeit bewirken.

15. Verfahren nach einem der Ansprüche 1 bis 14,
**dadurch gekennzeichnet,**
**dass** die Reaktion in Gegenwart von Katalysatoren und/oder Zuschlagstoffen erfolgt.

16. Verfahren nach einem der Ansprüche 1 bis 15,
**dadurch gekennzeichnet,**
**dass** die Einsatzstoffe und/oder Katalysator und/oder Zuschlagstoffe gemeinsam oder in getrennten Produktströmen, in flüssiger oder fester Form, dem Extruder, Intensiv-Kneter, Intensiv-Mischer oder statischen Mischer zugeführt werden.

17. Verfahren nach Anspruch 16,
**dadurch gekennzeichnet,**
**dass** die Zuschlagstoffe gemeinsam mit den Einsatzstoffen zu einem Produktstrom zusammengefasst werden.

18. Verfahren nach einem der Ansprüche 1 bis 17,
**dadurch gekennzeichnet,**
**dass** das Di- oder Polyisocyanat B) mit der polymersationsfähigen Verbindung C) mit mindestens einer freien Alkoholgruppe und einer polymerisationsfähigen (Meth)acrylatgruppe zur Reaktion gebracht werden bevor sie in einem Produktstrom dem Extruder, Intensiv-Kneter, Intensiv-Mischer oder statischen Mischer zugeführt werden.

19. Verfahren nach einem der Ansprüche 1 bis 18,
**dadurch gekennzeichnet,**
**dass** bei mehr als zwei Produktströmen diese gebündelt zugeführt werden.

20. Verfahren nach einem der Ansprüche 1 bis 19,
**dadurch gekennzeichnet,**
**dass** ein oder beide Produktströme geteilt werden.

21. Verfahren nach einem der Ansprüche 1 bis 20,
**dadurch gekennzeichnet,**
**dass** der Katalysator mit einem der Stoffströme zusammengefasst wird oder in einem der Ströme gelöst vorliegt.

22. Verfahren nach einem der Ansprüche 1 bis 21,
**dadurch gekennzeichnet,**
**dass** der Zuschlagstoff mit einem der Stoffströme zusammengefasst wird oder in einem der Ströme gelöst vorliegt.

23. Verfahren nach einem der Ansprüchen 1 bis 22,
**dadurch gekennzeichnet,**
**dass** die Eintrittstelle der Produktströme in der Reihenfolge variabel und zeitlich versetzt gehandhabt wird.

24. Verfahren nach einem der Ansprüche 1 bis 23,
**dadurch gekennzeichnet,**
**dass** eine Nachreaktion angefügt wird.

25. Verfahren nach Anspruch 24,
**dadurch gekennzeichnet,**
**dass** die Nachreaktion in kontinuierlich betriebenen Systemen, wie Rohrreaktoren, gerührten oder ungerührten Verweilzeitbehältern, Rohrbündeln, erfolgt.

26. Verfahren nach einem der Ansprüche 1 bis 25,
**dadurch gekennzeichnet,**
**dass** die Konfektionierung je nach Viskosität des den Extruder, Intensiv-Kneter, Intensiv-Mischer oder statischen Mischer und/oder die Nachreaktionszone verlassenden Produktes zunächst durch weitere Abkühlung auf eine zur späteren Abfüllung/Silierung hinreichende Temperatur eingeleitet wird.

27. Verfahren nach mindestens einem der Ansprüche 1 bis 26,
**dadurch gekennzeichnet,**
**dass** die Verweilzeit der Einsatzstoffe 3 Sekunden bis 15 Minuten, bevorzugt 3 Sekunden bis 5 Minuten, besonders bevorzugt 5 bis 180 Sekunden, beträgt.

28. Verfahren nach mindestens einem der Ansprüche 1 bis 27,
**dadurch gekennzeichnet,**
**dass** die Reaktion bei Temperaturen von 25 bis 320 °C, bevorzugt von 50 bis 250 °C, besonders bevorzugt von 70 bis 220 °C erfolgt.

29. Verwendung der nach den Ansprüchen 1 bis 28 hergestellten Urethan(meth)acrylate als Bindemittel zur Herstellung von Strahlen härtbaren Lösemittel haltigen Lacken oder Pulverlacken.
